# EUROPEAN PATENT APPLICATION

(11) **EP 4 242 950 A1**
(43) Date of publication of application: **13.09.2023**
(21) Application number: 22161332.6
(22) Date of filing: 10.03.2022
(51) Int. Cl.: G06Q 30/00, G06K 9/00, G06N 20/00, G06V 10/10

(54) **A SYSTEM AND A COMPUTER-IMPLEMENTED METHOD FOR DETECTING COUNTERFEIT ITEMS OR ITEMS WHICH HAVE BEEN PRODUCED ILLICITLY**

(71) Applicant: Ives, Nicholas, 1299 Crans VD (CH)
(72) Inventor: Ives, Nicholas, 1299 Crans VD (CH)
(74) Representative: Odoom, Ernest

(57) **Abstract**

The present invention allows for a consumer to verify the authenticity of a commercial product at the point of sale using his or her mobile phone. Images of the product packaging, captured by the user and sent to a remote server, are analysed at the server and the consumer receives a result form the server saying whether the product is a genuine product and/or whether the product is being sold legally.

## Description

### TECHNICAL DOMAIN

The inventive concepts described herein relate generally to the domain of the authentication of physical objects, notably commercial goods or consumer products. More particularly, embodiments of the invention allow for product consumers to access reliable counterfeit detection capabilities using their own hand-held communication devices. Embodiments of the present invention make use of image processing and machine learning techniques as well as rule-based analysis techniques.

### BACKGROUND

Counterfeiting of valuable commercial goods has long been a problem. The luxury goods industry and the pharmaceutical industry for example have been largely targeted by those who seek to make a profit from selling counterfeit, fake or otherwise unlawfully or illicitly produced goods. With regard to pharmaceutical products there is the added risk that consumers may ingest or otherwise apply harmful or even lethal substances after unwittingly purchasing fake products.

The World Health Organisation estimates that over one million people in the world die each year from substandard, counterfeited drugs. It is estimated that more than ten percent of all pharmaceutical products in the global supply chain are counterfeit, with up to thirty percent of medicines sold in the Asia, Africa and Latin America market being counterfeit.

Several technological solutions have been proposed to alleviate the problem of counterfeit products. One such solution, which is widely used in the pharmaceutical industry, is known as serialisation and involves the use of unique identification codes for all medicines. The unique identifiers are generated by the manufacturer and attached to the outer packaging of the medicine, for example in the form of a 2D barcode. Manufacturers enter each medicine's unique identification code (UID) to a database, preferably a secure database maintained at least at a national level. At the point of sale, the pharmacist scans the outer packaging of the medicine, thus effectively de-commissioning the medicine, with the UID then being removed from the system. When the pharmacist scans the UID, the system informs him or her whether the medicine can be dispensed or whether that particular box of medicines has been recalled, withdrawn, stolen or otherwise locked. The system is for use by pharmacists and requires that the pharmacists obtain scanners and that they be connected to the National Database. Once the medicine is sold, its unique identifier drops out of the system. In other words, it is decommissioned. Medicines drop out of the system once they are decommissioned. Decommissioning is an important feature of the serialisation system for preventing falsified medicines from entering the supply chain as it serves to keep drugs out of the supply chain once they are expired or dispensed, thus preventing unscrupulous parties from reselling or otherwise distributing them.

United States patent application publication number US 2008/0011841 A1 discloses a method for detecting product code duplication and product diversion, where each product is marked with a unique code. Consumers may communicate with a server using a mobile communications device to request whether a code on a product is authentic. If a request for the same code has already been made, then the server replies that the code may not be authentic. In another example, the server also receives geographical information relating the requestor to a particular geographical location. The server may then check whether the product has been diverted from the geographical location where it was intended to be sold.

Another solution involves the use of anti-tampering devices or tamper-evident devices. An example of such a device is a label, attached across the opening of the box of medicine, which at least partly disintegrates or changes colour or causes damage to a part of the box on which it is attached whenever an attempt is made to peel or cut the label from the box. Other tamper-evident labels exist which indicate whether the label had been exposed to heat or to a solvent. Often such labels have holograms on them, which clearly show whether the label has been subjected to physical tampering.

Tamper-resistant devices are required to be placed on most over-the-counter drug products to meet regulations stipulated by the United States Food and Drug Administration. In Europe, the Falsified Medicines Directive stipulates that medicine packaging must include both an anti-tamper device and a unique identifier to prevent falsified medicines from entering the supply chain.

Not all countries require that serialisation be used on medicine packaging, so more sophisticated technical solutions have been proposed for detecting counterfeit goods. Some such solutions use techniques involving the detection of a particular visible sign or code added to the goods or added to a package in which the goods are sold, so that the goods can be identified at some points in the manufacturing chain or in the distribution chain. Visible signs which have been used in such techniques include holograms for example, or patterns, or arrays of dots. Invisible markings have also been used to create fingerprints which can be used to check authenticity. For example, a sticker made of a paper having a particular microstructure may be added to a package, the unique microstructure being used to create a unique fingerprint which can be used as a check of authenticity. This type of solution requires specialised equipment to check the authenticity and therefore is of little use for enabling the end consumer to perform the authentication.

Instead of visible or visibly detectable signs, taggants have also been used. A taggant may be chemically detectable or physically detectable, for example. Radio frequency microchips are another form of taggant. Such approaches all require that visible signs or physical, chemical or electronic tags be added to the products, which may not always be convenient and often involves added costs. Such solutions offer limited value in helping the end consumer to authenticate the product since they also require specialised equipment.

The state of the art in the verification of the authenticity of commercial products also includes the use of machine learning techniques to inspect images of a part of the product, such as a label with a brand name, and to decide whether the product is authentic or fake. The authentication method is achieved using machine learning from microscopic variations within the images and requires extensive training to achieve reliable authenticity verification. The images may be captured using a hand-held image capture device. Such techniques are disclosed, for example, in United States patent application publication number US 2017/0032285 A1. Machine learning techniques are also disclosed as a means for detecting drug anomalies in United States patent application publication number US 2021/0035288 A1, where images of individual pills are captured and analysed rather than the packaging. In this case a special light source is required, rendering the method inconvenient for use by an end consumer. This type of technology however does not work for drugs which are dispensed as gels, creams or liquids. It is also worth noting that introducing serialisation techniques at the level of individual pills would not provide a scalable solution.

### BRIEF SUMMARY OF THE INVENTION

Illegitimate production includes counterfeiting, where an attempt may be made to copy or imitate a genuine product. The imitation product may include all of the same ingredients as the genuine product but the manufacturing process may be different, possibly of inferior quality, leading to an imitation product which does not exactly resemble the genuine product. Another type of illegitimate production, which may even be dangerous to consumers' health should they fall victim to an unwitting purchase of such a product, involves imitating the genuine product but using different or inferior ingredients, some of which may produce more or less harmful effects. Illegitimate production also covers cases where genuine ingredients are used as well as the genuine manufacturing process. Invariably, this produces product which cannot be detected as being fake using the known visual inspection techniques. In some cases, the product may be manufactured on the genuine production line without the knowledge, or without the permission, of the factory owners. In some cases, genuine product may be unlawfully re-routed or stolen. For example, product intended to be sold in a country where it is normally sold at a low value may end up being sold for a higher value in another country, without the owners of the manufacturing process knowing. Manufacturing processes however are usually proprietary or otherwise controlled processes. Using the process without the owner's consent, or illicit production, is sometimes known as pirate production, which is unlawful. Re-routing of product is also unlawful. Embodiments of the present invention allow for counterfeit, or fake, product to be identified as well as product which is obtained through illegitimate use of a proprietary or otherwise protected or controlled process.

In view of the state of the art, it is desirable to provide a system and method for detecting counterfeit goods by an end consumer of the goods using a standard electronics device such as a mobile phone. It is also desirable that the system and the method be able to detect whether goods, which would otherwise appear to be authentic, have been offered for sale without the authorisation of an owner of the goods or an owner of equipment and/or processes used to produce the goods. It is further desirable that the system and method continue to perform should some aspects of the packaging of the goods change, for example the design of the packaging, the colour of the packaging, or at least part of any signs or characters on the packaging without having to manually re-train parts of the system as is the case in known machine learning based systems.

Embodiments described herein may be used to allow an end-consumer to detect counterfeit, or pirated, or otherwise illicitly or illegitimately produced goods. More particularly, a consumer's own hand-held portable communications device may be used to send images, at the point of sale, of the packaging of a pharmaceutical product for example, to a remote server and to receive a result indicating whether the product is a genuine product or whether it is a fake or otherwise illegitimately produced product.

According to a first aspect, there is disclosed herein a computer-implemented method for verifying an authenticity of a physical item and/or for verifying whether the item is a product of an illegitimate use of a proprietary or otherwise protected or controlled process. The method includes the following steps:
receiving, by one or more processors of a processing system, one or more images of one or more views of the item, said images having been captured by a mobile communications device of a user;
analysing said captured images, by the processing system, according to at least one trained machine learning model to provide an identification of the item;
determining, by the processing system, based on the identification of the item, a risk profile for the item; and
sending, from the processing system to the user device, a confidence score based at least on said risk profile, the confidence score giving an indication of how likely it is that the item is an authentic item and/or is not a product of an illegitimate use of a proprietary or otherwise protected or controlled process;
characterised in that:
   the item is marked with a machine-readable mark in which at least a unique identifier of the item is encoded; and
   the processing system has access to a database of legitimate items, said database of legitimate items comprising a plurality of legitimate unique identifiers of a corresponding plurality of legitimately produced items;
   the method further comprising:
      receiving, at the processing system, the unique identifier of the item, either: by the processing system decoding the unique identifier from the mark in at least one of said captured images; or by receiving the unique identifier from the mobile communications device;
      accessing the database of legitimate items, by the processing system, to check at least whether the unique identifier of the item corresponds to a legitimately produced item;
      based on said check, adjusting the risk profile by the processor; and updating the confidence score, by the processing system (130), based on the adjusted risk profile;
   said unique identifier of the item persisting in the database of legitimate items after said check.

According to a second aspect, a system is provided for verifying the authenticity of an item and/or for verifying whether the item is a product of an illegitimate use of a proprietary or otherwise protected or controlled process, the system comprising a mobile communications device communicably connectable to a remote server, the server comprising one or more processors and a memory and having access to a database of legitimate items, the system being configured to carry out the steps of the method described above.

According to a third aspect, a computer programme product is provided, comprising instructions, which when the programme is executed by a computer, cause the computer to perform the steps of the method disclosed above.

According to an aspect, an application is provided to allow the consumer to use their mobile communications device to connect to the remote server for uploading images of the product and for receiving the result of the authentication back from the server. The combination of machine learning techniques with the benefits provided from using serialisation information allows for embodiments of the present invention to be performed on communication devices having little computing power. Pharmaceutical manufacturers who provide the unique identifiers of their products for inclusion into the database of legitimate items may also benefit from the systems and methods described herein. Manufacturers may also benefit from the system in that they may get a more direct access to the consumers of their products and to other points in the supply chain, such as wholesalers, pharmacists, hospitals and clinics. Manufacturers may therefore get direct feedback relating to side effects and users' opinions. A dashboard may be provided to provide analysis results regarding which types of counterfeiting or pirate activities are prevalent and where, and for which products. This may help manufacturers to guard against such activity and even to predict where and when the fraud will next occur.

Although embodiments described herein are disclosed as being targeted for verifying the authenticity of any physical item which could be targeted by counterfeiters, products from the pharmaceutical industry pose a particular problem with respect to safety and to financial criminality. Drugs for human or animal consumption are therefore of particular interest in the context of the present invention.

### BRIEF DESCRIPTION OF THE DRAWINGS

The inventive concepts described herein will be better understood thanks to the detailed description which follows and the accompanying drawing, which is given as non-limiting examples of embodiments of the inventive concepts, namely:

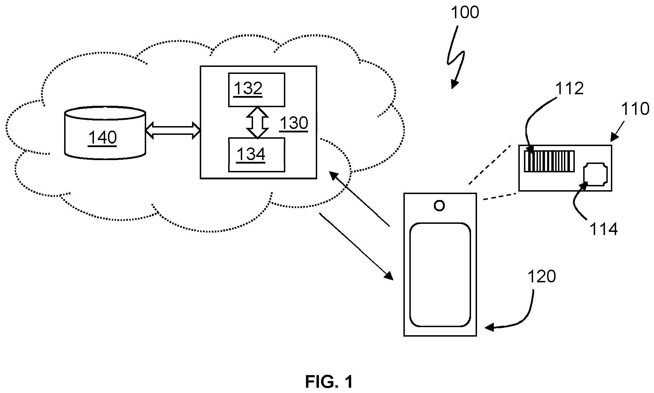

FIG. 1, illustrating a system according to an embodiment of the present invention.

### DETAILED DESCRIPTION

Embodiments described herein allow for consumers of goods such as drugs or other medicines to check the authenticity of the goods they are purchasing at the point of sale using their own mobile communications device. The authenticity checking method is enabled without the manufacturers of the goods having to add any signs, elements, devices or indicators other than those that they would normally use, like a barcode for product track and trace purposes, for example. Although the rest of the description focusses on the authentication of pharmaceutical products, embodiments of the present invention may be deployed in any setting where products are to be authenticated, such as luxury goods, jewellery, timepieces, consumables, and so on.

FIG. 1 illustrates a system in which an embodiment of the present invention may be deployed. A method for verifying an authenticity of a physical item (110) and/or for verifying whether the item (110) is a product of an illegitimate use of a proprietary or otherwise protected or controlled process may be performed by such a system (100).

A consumer, or user, wants to check if an item, such as a box of medicine (110), is genuine or has not been illegitimately produced. The box (110) may have some kind of design on it or a brand name or some distinctive marking (114). According to an embodiment, the distinctive marking may be an embossed pattern, such as braille writing for example, with the name of the product or the brand name, or instructions on how to use or apply the medicine, or instructions on how to authenticate the medicine. The distinctive marking may be writing in Chinese characters or in French language, for example. The distinctive marking may be a colour scheme or particular package design used for the particular medicine as intended for a particular market. Consequently, the same goods or products may be packaged in packaging which is visually distinctive depending on the geographical market where the product is intended to be sold.

According to an embodiment, the consumer may be prompted, by an application on their mobile communications device (120), to capture one or more images of the box (110). According to an embodiment, the consumer may also be prompted, by the application, to turn the box and to capture images of certain parts of the box from different angles. The images may then be sent to a remote server (130) having at least one processor (132) and a memory (134). According to an embodiment, the processor (132) is configured as a machine learning apparatus having access to a trained machine learning model for classifying the items (110) in the images as authentic or fake. According to other embodiments, the processor may be configured to identify or categorise the items (110) using one or more computer vision models of different types. This first classification may already allow for the item to be identified. For example, by performing optical character recognition on writing detected on the packaging, the remote server may be able to work out that the item is a drug of a particular type. A memory of the remote serve, or a database to which the remote server has access may allow the remote server to determine a risk profile for that drug, related to historical data about how often that particular drug was found to be a fake and/or in which geographical region the drug was found to be fake and/or from which types of outlets most fakes occur, etc. The risk profile may therefore be a complicated set of data providing lots of information about the likelihood of an item being a fake. Risk profiles may be provided by manufacturers, for example and may evolve with time. From the risk profile, the server can determine the likelihood of the item being a fake. The server may then send a result back to the user, via the mobile communications device, to report on the likelihood of the item being a fake, in terms of a percentage value for example. The report is preferably a simplified report, taking account of the risk profile, allowing the consumer to quickly and reliably estimate whether the item is genuine. The report may be in the form of a confidence score, for example a percentage likelihood of the item being a fake (or vice versa, a genuine). According to an embodiment, the risk profile may be presented directly to an informed user who is able to readily interpret such data.

According to an embodiment, as well as sending the images to the remote server, the mobile communications device may provide the remote server with a geographical location where the images were captured. The risk profile of the product may be such that finding that particular product in that particular geographical region means that it is very likely to be counterfeit. The likelihood therefore increases and the user may be advised by the remote server that there is a higher probability that the product is fake. Consequently, the confidence score is reduced.

It is commonplace for drug packaging to be marked with a unique identifier, or unique serialisation number. This is to allow for track-and-trace of the product to be performed on the goods as they move through the supply chain. Indeed, in some geographical markets it is already mandatory for unique identifiers to be marked on all packaging. Embodiments of the present invention take advantage of such marks with the unique identifiers, or in which unique identifiers are encoded. Manufacturers therefore do not have to add any markings to their packaging over and above what they already do in order to allow them to benefit from the verification possibilities provided by the invention. According to an embodiment, which is preferably combined with the embodiments described above, the processor (132) also has access to a database (140), preferably a secure database. The database (140) may store a record of unique identifiers of all authentic products from a particular manufacturer, i.e. a register of known genuine goods. Manufacturers participating in the system for verifying authenticity make such data available for the purpose of performing the verification of authenticity. The database may also contain information like the product name, the expiry date, the markets for which it was intended and so on. The unique identifier of each item is marked (112) on each box. The mark may be a human-readable mark, for example it could be simply the unique identifier in plain text. The human-readable mark may also be described as being machine-readable for a machine being configured to perform optical recognition techniques upon images of the item in which the plain text is visible. Otherwise, or in addition, the mark (112) may be a machine-readable mark, such as a one-dimensional barcode or a two-dimensional barcode marked on the packaging. Other names for a two-dimensional barcode are a matrix barcode or a data matrix. A QR code, also known as a quick response code, is an example of a known type of data matrix. The machine-readable mark may encode the unique identifier of the item. It may also encode further information about the item, such as the expiry date, the batch number, a product code, etc. For each unique identifier, the database may hold a variety of different information about the authentic item which was attributed that unique identifier, such as the product name, the market for which it was intended, the geographical location where the product is intended to be sold, information related to its production history, an expiry date, and so on. According to the embodiment, the processor may decode the mark (110) in the captured image or images of the item to discover its unique identifier and/or any other data encoded thereon. According to a variation of the embodiment, the user may be prompted by the application to enter the unique identifier into the mobile communications device, where the mark is in human-readable form. The processor then may receive the unique identifier from the communications device, or the processor may decode the mark to get the unique identifier. The processor may then check the database of legitimate items to verify whether the item is genuine or has not been illegitimately produced. This analysis may be done using a further trained machine learning model. In another variant, this may be done using a rule-based analytical process. The result of the analysis may be used to adjust the risk profile and consequently the confidence score or likelihood of the item being fake or illegitimately produced.

The processor may then send back a result to the mobile communications device to inform the user of whether the item is authentic or whether it was produced illicitly, the result being in the form of a confidence score indicating how likely it is that the item is authentic and/or is not a product of an illegitimate use of a proprietary or otherwise protected or controlled process.

In the context of the present disclosure, the user may be the end consumer of the item being authenticated. However, according to embodiments, the user may otherwise be the vendor. For example, where the item is a box of drugs, such a box of 30 pain killing tablets, the user could be the consumer who will consume the drugs, or it could be the pharmacist who sells the drugs to the consumer. According to an embodiment, where the pharmacist is the user, the item may be a consignment of drugs including a large number of boxes of drugs, say a crate of 120 boxes of 30 pain killing tablets, where each of the boxes has its serial number or unique identifier. Capturing of the unique serial numbers (or marks encoding the unique serial numbers) may be performed by the pharmacist or by the consumer. The crate may also have an optical machine-readable mark, which may be unique for the crate, or which may reference all of the unique identifiers of the boxes within the crate. According to an embodiment, the pharmacist may capture the machine-readable mark on the crate to let the system know which product has arrived at the pharmacy to be sold on to the consumers.

According to an embodiment, the processor has access to a plurality of different algorithms, including machine learning models, each model or algorithm adapted to treat different aspects of authenticity checking. For example, the box (110) may have a braille marking. In this embodiment, and others, the server may receive geographic data from the user's mobile communications device, confirming a location of the device when the images of the item were captured. The processor may be configured to recognise the braille marking and to determine the product name from the braille marking. Another algorithm or model may allow the processor to determine the product name from other markings on the package. Another algorithm or model may allow the processor to determine, from the database of legitimate items, that the product is only available for sale in the United States. Thanks to the geographical data recovered from the user's communication device, the processor is able to determine where the images of the item were captured. If the images were captured in Europe, for example, then the resulting risk profile may be markedly different from a risk profile for goods bought in Africa, for example. By combining the information acquired from using the different algorithms or models, the system is able to better determine whether or not the item is counterfeited or whether it was produced illegitimately.

According to an embodiment, the processor may also receive the serial number or other identifying number of the mobile communications device. The processor may also receive the date and time of the capture of the images (scanning). Consequently, a model or algorithm executed by the processor allows it to determine that the likelihood of an item whose unique identifier was scanned by two different communications devices being a fake is quite high.

According to an embodiment, models may make use of a time when the images of the item were captured and an expiry date determined from the database of legitimate items or an expiry date determined from the mark on the item.

Other features which may be used by the models to derive a confidence score for the likelihood of an item being authentic, or not from an illegitimate production, include a geographical datum corresponding to a location of where at least one of the images was captured or where a legitimate item should be available to the user, a reference to a point of sale where a legitimate item should be available to the user, an expiry date of the item, a production batch number of the item, and a brand name for a corresponding legitimate item and where the corresponding item should be available.

Other models allow the processor to build up a picture of the counterfeiting landscape. For example, in which parts of the world are the most counterfeits being detected? What kind of counterfeit types are being discovered? The more users performing scans the richer the information becomes. In the same way as any statistical analysis improves as more data for determining an outcome is used, the models and algorithms used in the present invention improve over time. The models may be continually improved upon in this way. By combining the image processing techniques with the database of legitimate items the models may be updated automatically, making them increasingly robust. The system is thus able to tolerate modifications in packaging without having to retrain the models, for example. Pharmacists and drug manufacturers may find benefit in using embodiments of the present invention, as it allows to have a better understanding of counterfeiters' activities and how they operate, providing an opportunity to better predict and possibly circumvent their operations. Beating piracy not only provides heightened safety to consumers but also reduces loss in revenue to the legitimate actors in the industry.

According to embodiments, different types of models may be used to target different types of counterfeiting attempts. For example, neural network, decision tree and linear regression models each are suited to detecting different aspects of counterfeiting. The models may evolve to take account of information becoming available about which type of drug is most frequently counterfeited and/or which regions in the world are most renowned for counterfeiting, in which case the likelihood of a particular drug or a drug from a particular region being a fake may be shifted up.

According to an embodiment, the choice of models used may be automatic.

Embodiments of the present invention allow for the detection, for example, of unique identifiers having been used more than once, product which appears to have been manufactured at a time when a production line was known to have been closed, product being scanned in geographical regions where it is not supposed to be, product being scanned with devices at locations which are too far apart within a too short period of time, and so on.

According to another aspect, a dashboard may be produced to show statistics related to the data related to the detection of counterfeit or otherwise illegitimate products, allowing manufacturers to better fight against fraud and even to predict where the next fraud attacks will occur and what types of fraud are in operation. Manufacturers will therefore have an incentive to participate in the system, by making their data available for the database of legitimate items. Contrary to the databases used for track-and-trace, unique identifiers are not decommissioned once the corresponding item is sold and/or its authenticity checked.

Although it is possible, according to an embodiment, for at least a part of the processing system to be located in the mobile communications device, in preferred embodiments the processing system is in the remote server.

According to an embodiment, the unique identifier may be encoded on a wirelessly accessible device, such as an RFID device, attached to the packaging. In this embodiment, the processor receives the unique identifier from the mobile communications device, which is configured to read and decode the RFID device to obtain the unique identifier.

Embodiments of the present invention provide safety to the end consumer. Manufacturers and pharmacists find advantage in using the system because it allows fast feedback on where and how counterfeiters are operating. Manufacturers are thus encouraged to provide risk profiles related to their products and to allow the models to be updated as consumers and/or pharmacists use the system.

Embodiments of the present invention may provide access to drug authentication capabilities to people with certain types of disabilities. For example, in embodiments where the drug packaging includes braille markings, the braille may allow a blind or otherwise sight-impaired person to work out how to authenticate the box of drugs. An application on a user's mobile phone may provide instructions to the user on how to capture images of the packaging, with perhaps feedback on whether a captured image was clear enough and whether the user should redo the capture or turn the box. Thus, users who are not able to read, or users who do not speak or read the language of any instructions on the box, can also have ready access to the authentication technology provided by embodiments of the present invention.

## Claims

1. A computer-implemented method for verifying an authenticity of a physical item (110) and/or for verifying whether the item is a product of an illegitimate use of a proprietary or otherwise protected or controlled process, the method comprising:
receiving, by one or more processors of a processing system, one or more images of one or more views of the item (110), said images having been captured by a mobile communications device (120) of a user;
analysing said captured images, by the processing system (130), according to at least one trained machine learning model to provide an identification of the item (110);
determining, by the processing system (130), based on the identification of the item, a risk profile for the item (110); and
sending, from the processing system (130) to the user device (120), a confidence score based at least on said risk profile, the confidence score giving an indication of how likely it is that the item is an authentic item and/or is not a product of an illegitimate use of a proprietary or otherwise protected or controlled process;
**characterised in that**:
the item (110) is marked with a machine-readable mark (112) in which at least a unique identifier of the item (110) is encoded; and
the processing system (130) has access to a database of legitimate items (140), said database of legitimate items (140) comprising a plurality of legitimate unique identifiers of a corresponding plurality of legitimately produced items;
the method further comprising:
receiving, at the processing system (130), the unique identifier of the item (110), either: by the processing system (130) decoding the unique identifier from the mark (112) in at least one of said captured images; or by receiving the unique identifier from the mobile communications device (120);
accessing the database of legitimate items (140), by the processing system (130), to check at least whether the unique identifier of the item corresponds to a legitimately produced item;
based on said check, adjusting the risk profile by the processor; and
updating the confidence score, by the processing system (130), based on the adjusted risk profile;
said unique identifier of the item persisting in the database of legitimate items after said check.

2. The method according to claim 1, wherein: the mobile communications device is configured to decode the unique identifier from the mark (112) in at least one of said captured images; or the mark (112) is in a human-readable and/or human-decodable format, the user entering the unique identifier into the mobile communications device.

3. The method according to either of claims 1 or 2, wherein the database of legitimate items further includes, for one or more of the unique identifiers, historical data related to the corresponding legitimately produced item, said historical data indicating that said unique identifier has already been checked, said adjustment to the risk profile and the subsequent updating of the confidence score resulting in a reduction in the likelihood that the item is an authentic item and/or is not a product of an illegitimate use of a proprietary or otherwise protected or controlled process.

4. The method according to any of the preceding claims, wherein the database of legitimate items further includes, for one or more of the unique identifiers, commercial data related to the corresponding legitimately produced items, said commercial data indicating that the item having said unique identifier was intended for sale in one or more first geographical regions, the method further comprising:
retrieving from the mobile communications device, by the processing system (130), a second geographical location, said second geographical location being a geographical location of the mobile communications device when the image of the item was captured;
said adjustment to the risk profile and the subsequent updating of the confidence score resulting in a reduction in the likelihood that the item is an authentic item and/or is not a product of an illegitimate use of a proprietary or otherwise protected or controlled process if the second geographical location is not the same as any of the first geographical locations.

5. The method according to any of the preceding claims, wherein a plurality of trained machine learning models are used to analyse different aspects of the captured image and / or different results obtained from said accessing the database of legitimate items (140), said adjustment to the risk profile and the subsequent updating of the confidence score resulting in a reduction in the likelihood that the item is an authentic item and/or is not a product of an illegitimate use of a proprietary or otherwise protected or controlled process whenever such analysis or a result of accessing the database of legitimate items tends to suggest that the item may be counterfeit or may be a product of an illegitimate use of a proprietary or otherwise protected or controlled process.

6. The method according to any of the preceding claims, the method further comprising:
comparing, by the processing system, a language of one or more words from the image with a name of the corresponding item according to the database of legitimate products.

7. The method according to either of claims 4 or 5, the method further comprising:
comparing, by the processing system, a language of one or more words from the image with the first geographical region.

8. The method according to any of the preceding claims, further comprising:
retrieving from the mobile communications device, by the processing system, one or more from: an identifier of the mobile communications device; and a time when the image was captured.

9. The method according to any of the preceding claims, wherein the processing system (132, 134) is located in a remote server (130).

10. The method according to any of the preceding claims, wherein the unique identifier of the item is encoded in a linear barcode (112) or in a matrix barcode visible on the item (110) whose authenticity is to be verified.

11. The method according to any of the preceding claims, the item (112) further comprising one or more embossed patterns, the embossed patterns being machine readable, one or more of said trained machine learning models further taking into account the embossed patterns in determining said result.

12. The method according to any of the preceding claims, wherein said item is a packaging for a proprietary or otherwise protected or controlled pharmaceutical product.

13. A system (100) for verifying the authenticity of an item (110) and/or for verifying whether the item (110) is a product of an illegitimate use of a proprietary or otherwise protected or controlled process, the item comprising a mark (112) encoding at least a unique identifier of the item, the system (100) comprising:
a mobile communications device (120) communicably connectable to a remote server (130), the server (130) comprising one or more processors (132) and a memory (134) and having access to a database of legitimate items (140), the system being configured to carry out the steps of the method of any of claims 1 to 12.

14. A computer programme product comprising instructions, which when the programme is executed by a computer, cause the computer to carry out the steps of the method of any of claims 1 to 12.
